# EUROPEAN PATENT APPLICATION

(11) **EP 4 167 631 A1**
(43) Date of publication of application: **19.04.2023**
(21) Application number: 22201406.0
(22) Date of filing: 13.10.2022
(51) Int. Cl.: H04W 28/06, H04W 84/12

(54) **COVERAGE ENHANCEMENT FOR 6GHZ LONG RANGE WIRELESS COMMUNICATIONS**

(30) Priority: 15.10.2021 US 202163255980 P; 12.10.2022 US 202217964876
(71) Applicant: MediaTek Inc., Hsinchu City 30078 (TW)
(72) Inventor: CHANG, Cheng-Yi, 30078 Hsinchu City (TW); HSIAO, Ching-Wen, 30078 Hsinchu City (TW); SHIU, Shu-Ping, 30078 Hsinchu City (TW)
(74) Representative: Hoefer & Partner Patentanwälte mbB

(57) **Abstract**

Techniques pertaining to coverage enhancement for 6GHz wireless communications are described. A first station, STA, communicates with a second STA in a 6GHz wireless band and/or low-power indoor, LPI, channels (810). The first STA performs a receiving signal combination and detection across multiple bandwidths such that a power level or a signal strength is enhanced in communicating with the second STA (820).

## Description

### CROSS REFERENCE TO RELATED PATENT APPLICATION

The present disclosure is part of a non-provisional patent application claiming the priority benefit of U.S. Provisional Patent Application No. 63/255,980, filed 15 October 2021, the content of which herein being incorporated by reference in its entirety.

### TECHNICAL FIELD

The present disclosure is generally related to wireless communications and, more particularly, to coverage enhancement for 6GHz long range wireless communications.

### BACKGROUND

Unless otherwise indicated herein, approaches described in this section are not prior art to the claims listed below and are not admitted as prior art by inclusion in this section.

In next-generation wireless communications, such as in 6GHz and/or low-power indoor (LPI) applications in accordance with the Institute of Electrical and Electronics Engineers (IEEE) standards, there are restrictions on power spectral density (PSD) by Federal Communications Commission (FCC) regulations. As transmit power is dominated by PSD for LPI applications, the restrictions on PSD tend to limit the coverage range of 6GHz long range communications. Therefore, there is a need for a solution of coverage enhancement for 6GHz and/or LPI applications in wireless communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to coverage enhancement for 6GHz and/or LPI applications in wireless communications. Under various proposed schemes in accordance with the present disclosure, non-high-throughput (non-HT) physical-layer protocol data units (PPDUs) may be duplicated to enhance receiver (Rx) sensitivity or coverage in 6GHz communications or PSD-bounded channels/bands. Thus, it is believed that various schemes proposed herein may address or otherwise alleviate aforementioned issue(s). A method and an apparatus according to the invention are defined in the independent claims. The dependent claims define preferred embodiments thereof.

In one aspect, a method may involve a processor of a first station (STA) communicating with a second STA in a 6GHz wireless band or LPI channels. The method may also involve the first STA performing a receiving signal combination and detection across multiple bandwidths such that a power level or signal strength is enhanced in communicating with the second STA.

In yet another aspect, an apparatus implementable in a first STA may include a transceiver configured to communicate wirelessly and a processor coupled to the transceiver. The processor may communicate, via the transceiver, with a second STA in a 6GHz wireless band or LPI channels. The processor may perform, via the transceiver, a receiving signal combination and detection across multiple bandwidths such that a power level or signal strength is enhanced in communicating with the second STA.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (loT), Industrial loT (IIoT) and narrowband loT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example scenario under a proposed scheme in accordance with the present disclosure.
FIG. 3 is a diagram of an example scenario under a proposed scheme in accordance with the present disclosure.
FIG. 4 is a diagram of an example scenario under a proposed scheme in accordance with the present disclosure.
FIG. 5 is a diagram of an example scenario under a proposed scheme in accordance with the present disclosure.
FIG. 6 is a diagram of an example scenario under a proposed scheme in accordance with the present disclosure.
FIG. 7 is a block diagram of an example communication system in accordance with an implementation of the present disclosure.
FIG. 8 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to coverage enhancement for 6GHz and/or LPI applications in wireless communications. According to the present disclosure, a number of possible solutions may be implemented separately or jointly. That is, although these possible solutions may be described below separately, two or more of these possible solutions may be implemented in one combination or another.

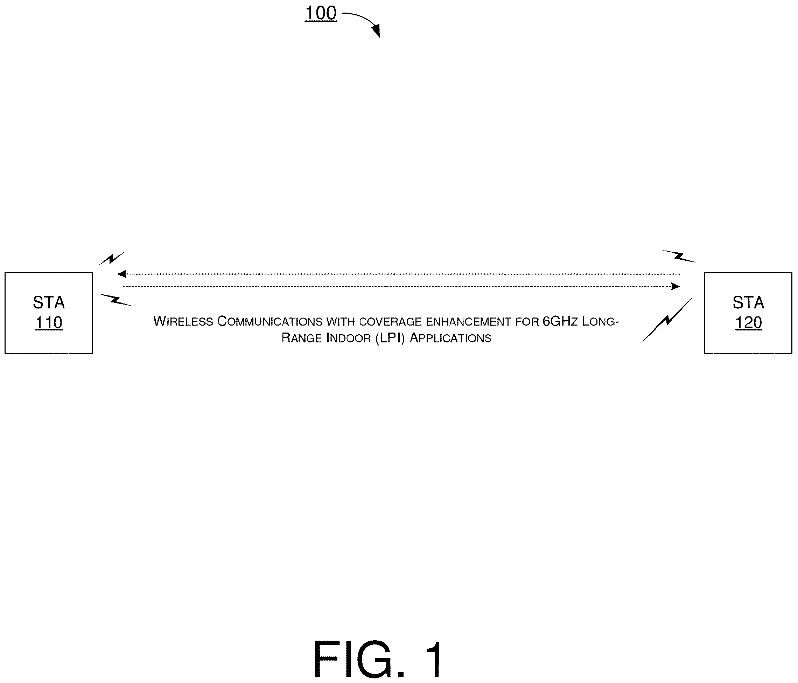

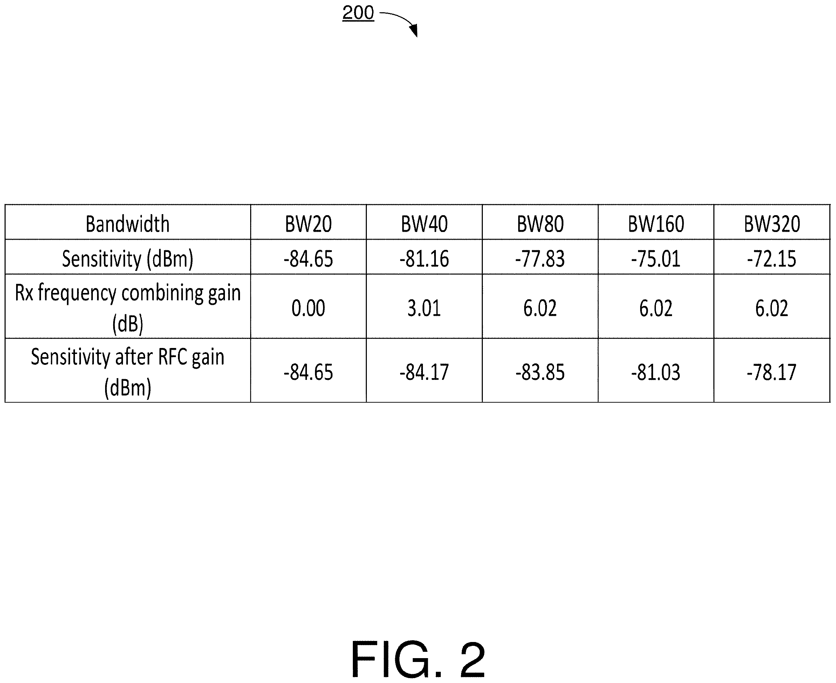

FIG. 1 illustrates an example network environment 100 in which various solutions and schemes in accordance with the present disclosure may be implemented. FIG. 2 ~ FIG. 8 illustrate examples of implementation of various proposed schemes in network environment 100 in accordance with the present disclosure. The following description of various proposed schemes is provided with reference to FIG. 1 ~ FIG. 8.

Referring to FIG. 1, network environment 100 may involve at least a first communication entity or station (STA) 110 communicating wirelessly with a second communication entity or STA 120. Each of STA 110 and STA 120 may be an access point (AP) STA or a non-AP STA, respectively. In some cases, STA 110 and STA 120 may be associated with a basic service set (BSS) in accordance with one or more IEEE 802.11 standards (e.g., IEEE 802.11be and future-developed standards) in a 6GHz and/or LPI application. Each of STA 110 and STA 120 may be configured to communicate with each other by utilizing the various proposed schemes described herein pertaining to coverage enhancement for 6GHz and/or LPI applications in wireless communications. It is noteworthy that, while the various proposed schemes may be individually or separately described below, in actual implementations each of the proposed schemes may be utilized individually or separately. Alternatively, some or all of the proposed schemes may be utilized jointly.

FIG. 2 illustrates an example scenario 200 under a proposed scheme in accordance with the present disclosure. Scenario 200 pertains to an example of receiver sensitivity evaluation of non-HT duplicate PPDUs. FIG. 2 shows a comparison among various bandwidths in terms of sensitivity and combining gain. Under the proposed scheme, receiver sensitivity may be enhanced by combining 20MHz signals per 80MHz frequency segment or subblock. For instance, 20MHz PPDUs of any kind may be combined in a given 80MHz frequency segment or subblock to achieve receiver sensitivity enhancement.

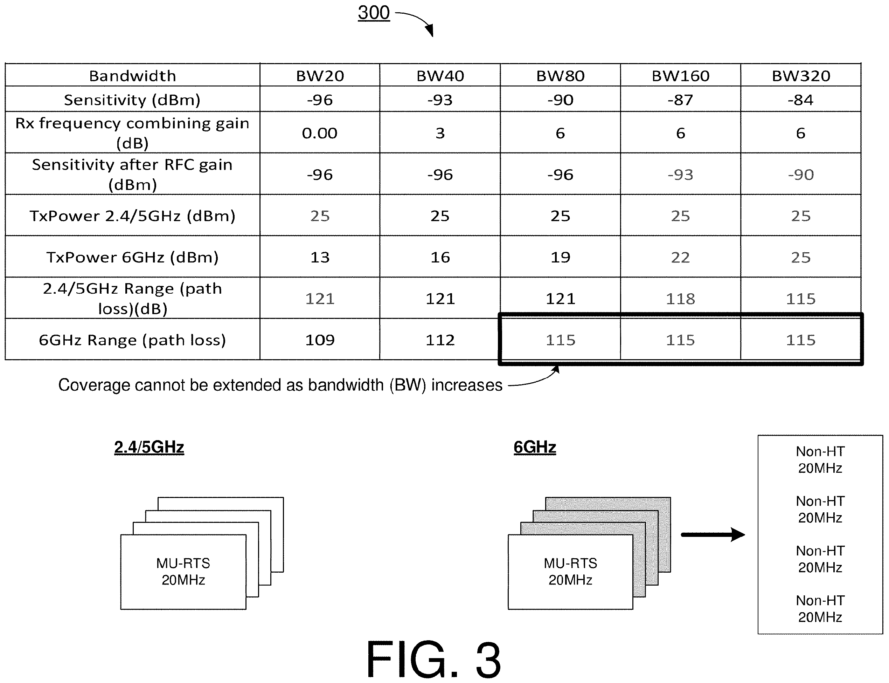

FIG. 3 illustrates an example scenario 300 under a proposed scheme in accordance with the present disclosure. Scenario 300 pertains to an example of receiver sensitivity enhancement. Under the proposed scheme, with respect to increasing the sensitivity for orthogonal frequency-division multiplexing (OFDM) (e.g., 24Mbps or 6Mbps), as 6GHz wireless communication is PSD bound but not total transmit (Tx) power bound, Tx power density would not be increased when bandwidth (BW) is reduced. In one approach, transmission BW may be reduced to gain Tx PSD on small bandwidths in non-PSD bounded channels (e.g., 2.4GHz). In another approach, the transmission bandwidth may be unchanged to gain total power for 6GHz and/or LPI applications. As shown in FIG. 3, for bandwidths such as 80MHz, 160MHz and 320MHz, the coverage cannot be extended as the Tx BW increases without combining gain.

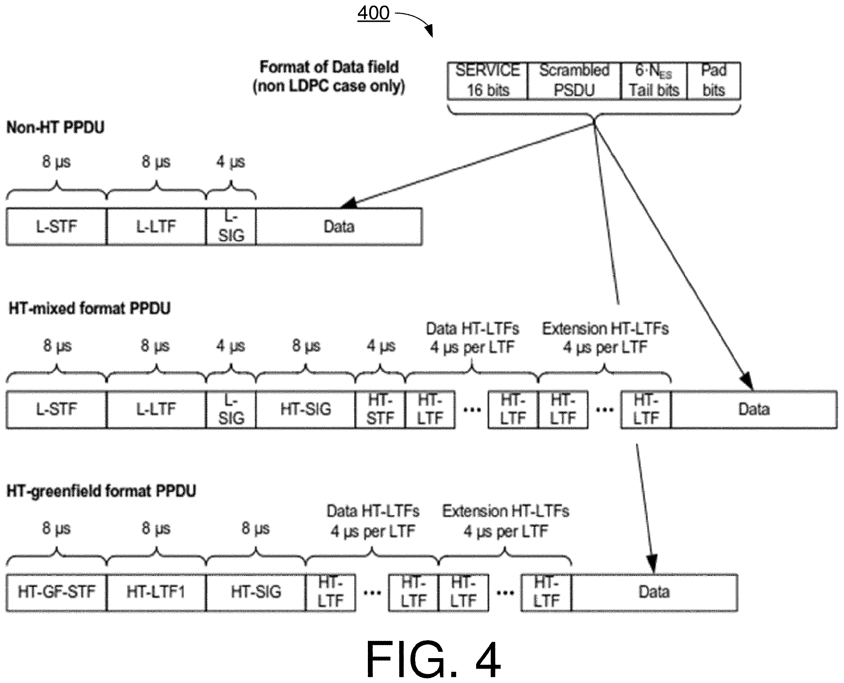

FIG. 4 illustrates an example scenario 400 of a format of a PPDU with which a proposed scheme in accordance with the present disclosure may be implemented. Under the proposed scheme, legacy short training field (L-STF) and legacy long training field (L-LTF) in a PPDU may be combined for wider-bandwidth communications (e.g., communications in bandwidths greater than 80MHz). Moreover, a legacy signal (L-SIG) field may have channel bandwidth (CBW) combination and per-80MHz combination. With desired bandwidth (DBW) combination, the coverage of DBW greater than 80MHz may be extended.

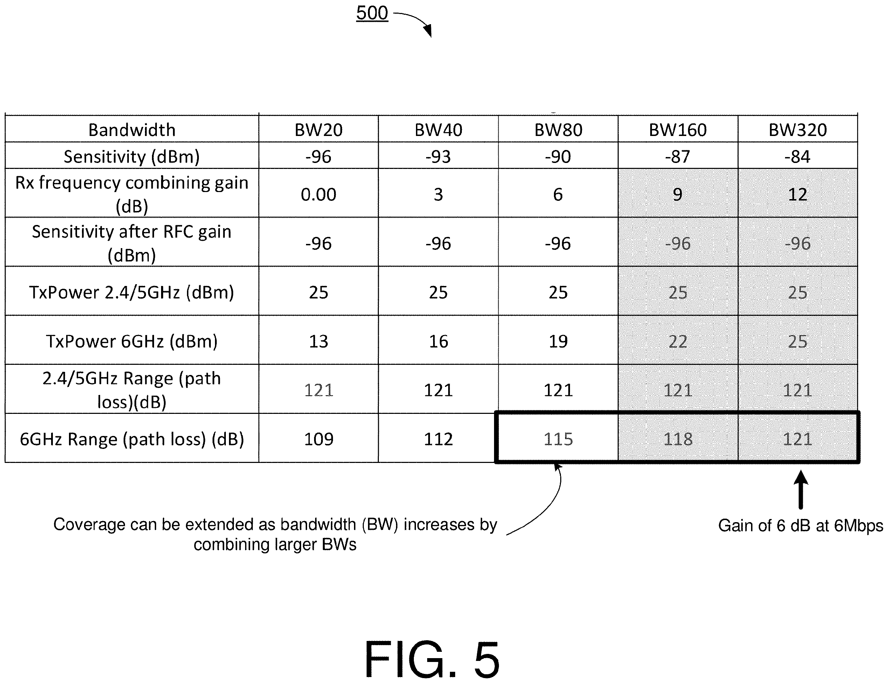

FIG. 5 illustrates an example scenario 500 under a proposed scheme in accordance with the present disclosure. Scenario 500 pertains to an example of receiver sensitivity enhancement for a non-HT duplicate modulation-and-coding scheme (MCS) such as MCS0 (e.g., for OFDM 6Mbps). Under the proposed scheme, as 6GHz and/ or LPI wireless communication is PSD bound but may not be total Tx power bound, Tx power would not be increased when BW is reduced. In one approach, transmission BW may be reduced to gain Tx PSD on small bandwidths. In another approach, the transmission bandwidth may be unchanged to gain total power for 6GHz and/or LPI applications. As shown in FIG. 5, for bandwidths such as 80MHz, 160MHz and 320MHz, the coverage can be extended as the Tx BW increases by combining larger BWs.

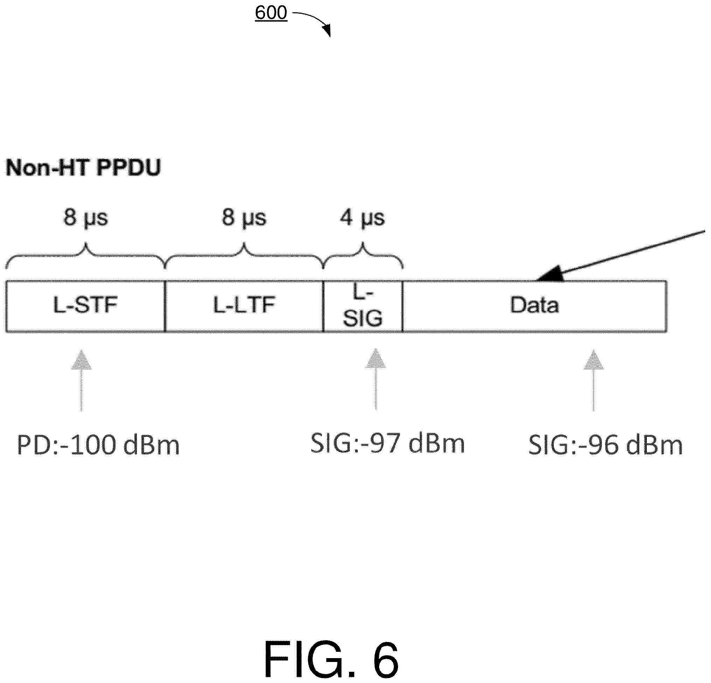

FIG. 6 illustrates an example scenario 600 under a proposed scheme in accordance with the present disclosure. Scenario 600 pertains to an example of receiver sensitivity enhancement for non-HT duplicate PPDUs. Under the proposed scheme, a gain in receiver sensitivity may be achieved with non-HT duplicate PPDUs (e.g., 6Mbps). Referring to FIG. 6, a sensitivity of -100 dBm for 80MHz preamble detection (PD) may be achieved, a sensitivity of -97 dBm for 80MHz signaling (SIG) may be achieved, and a sensitivity of -96 dBm for 80MHz data field may be achieved. Under the proposed scheme, non-HT duplicate PPDUs may be combined for DBW greater than 80MHz. For instance, STA 110 or STA 120 may first identify whether a PPDU to be transmitted is a non-HT duplicate PPDU (e.g., after L-SIG detection). Then, STA 110 or STA 120 may detect DBW for BW > 80MHz (similar with detection of BW > 20MHz for non-HT duplicate PPDUs). In particular, detection of 160MHz and/or 320MHz L-SIG may be added, with up to 4 dB gain and bounded by PD. Moreover, detection of 160MHz and/or 320MHz PD may be added, with up to 6 dB gain. Bandwidth detection may be performed per 20MHz received signal strength indicator (RSSI) at L-STF.

Under a proposed scheme in accordance with the present disclosure, the coverage of enhanced multi-link single radio (EMLSR) initial PPDU transmission in a multi-link operation (MLO) may be directly expanded in the 6GHz band or LPI channels. The same may be applicable for spatial multiplexing power save (SMPS) and self-defined scenarios in the 6GHz band or LPI channels. For instance, when a non-AP multi-link device (MLD) is operating in the EMLSR mode with an AP MLD supporting the EMLSR mode, an AP affiliated with the AP MLD that initiates frame exchanges with the non-AP MLD on one of the EMLSR links may begin the frame exchanges by transmitting the initial control frame to the non-AP MLD with the initial control frame transmitted in a non-HT PPDU or non-HT duplicate PPDU format using a rate of 6 Mbps, 12 Mbps or 24 Mbps.

### Illustrative Implementations

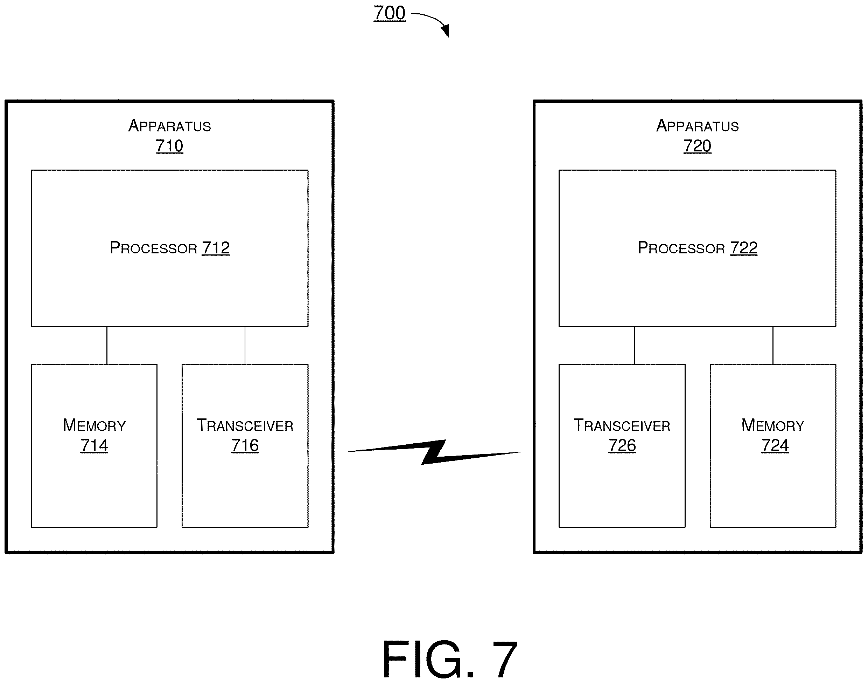

FIG. 7 illustrates an example system 700 having at least an example apparatus 710 and an example apparatus 720 in accordance with an implementation of the present disclosure. Each of apparatus 710 and apparatus 720 may perform various functions to implement schemes, techniques, processes and methods described herein pertaining to coverage enhancement for 6GHz and/or LPI applications in wireless communications, including the various schemes described above with respect to various proposed designs, concepts, schemes, systems and methods described above as well as processes described below. For instance, apparatus 710 may be implemented in STA 110 and apparatus 720 may be implemented in STA 120, or vice versa.

Each of apparatus 710 and apparatus 720 may be a part of an electronic apparatus, which may be a non-AP STA or an AP STA, such as a portable or mobile apparatus, a wearable apparatus, a wireless communication apparatus or a computing apparatus. When implemented in a STA, each of apparatus 710 and apparatus 720 may be implemented in a smartphone, a smart watch, a personal digital assistant, a digital camera, or a computing equipment such as a tablet computer, a laptop computer or a notebook computer. Each of apparatus 710 and apparatus 720 may also be a part of a machine type apparatus, which may be an loT apparatus such as an immobile or a stationary apparatus, a home apparatus, a wired communication apparatus or a computing apparatus. For instance, each of apparatus 710 and apparatus 720 may be implemented in a smart thermostat, a smart fridge, a smart door lock, a wireless speaker or a home control center. When implemented in or as a network apparatus, apparatus 710 and/or apparatus 720 may be implemented in a network node, such as an AP in a WLAN.

In some implementations, each of apparatus 710 and apparatus 720 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 710 and apparatus 720 may be implemented in or as a STA or an AP. Each of apparatus 710 and apparatus 720 may include at least some of those components shown in FIG. 7 such as a processor 712 and a processor 722, respectively, for example. Each of apparatus 710 and apparatus 720 may further include one or more other components not pertinent to the proposed scheme of the present disclosure (e.g., internal power supply, display device and/or user interface device), and, thus, such component(s) of apparatus 710 and apparatus 720 are neither shown in FIG. 7 nor described below in the interest of simplicity and brevity.

In one aspect, each of processor 712 and processor 722 may be implemented in the form of one or more single-core processors, one or more multi-core processors, one or more RISC processors or one or more CISC processors. That is, even though a singular term "a processor" is used herein to refer to processor 712 and processor 722, each of processor 712 and processor 722 may include multiple processors in some implementations and a single processor in other implementations in accordance with the present disclosure. In another aspect, each of processor 712 and processor 722 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 712 and processor 722 is a special-purpose machine specifically designed, arranged and configured to perform specific tasks including those pertaining to coverage enhancement for 6GHz and/or LPI applications in wireless communications in accordance with various implementations of the present disclosure.

In some implementations, apparatus 710 may also include a transceiver 716 coupled to processor 712. Transceiver 716 may include a transmitter capable of wirelessly transmitting and a receiver capable of wirelessly receiving data. In some implementations, apparatus 720 may also include a transceiver 726 coupled to processor 722. Transceiver 726 may include a transmitter capable of wirelessly transmitting and a receiver capable of wirelessly receiving data. It is noteworthy that, although transceiver 716 and transceiver 726 are illustrated as being external to and separate from processor 712 and processor 722, respectively, in some implementations, transceiver 716 may be an integral part of processor 712 as a system on chip (SoC) and/or transceiver 726 may be an integral part of processor 722 as a SoC.

In some implementations, apparatus 710 may further include a memory 714 coupled to processor 712 and capable of being accessed by processor 712 and storing data therein. In some implementations, apparatus 720 may further include a memory 724 coupled to processor 722 and capable of being accessed by processor 722 and storing data therein. Each of memory 714 and memory 724 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 714 and memory 724 may include a type of read-only memory (ROM) such as mask ROM, programmable ROM (PROM), erasable programmable ROM (EPROM) and/or electrically erasable programmable ROM (EEPROM). Alternatively, or additionally, each of memory 714 and memory 724 may include a type of non-volatile random-access memory (NVRAM) such as flash memory, solid-state memory, ferroelectric RAM (FeRAM), magnetoresistive RAM (MRAM) and/or phase-change memory.

Each of apparatus 710 and apparatus 720 may be a communication entity capable of communicating with each other using various proposed schemes in accordance with the present disclosure. For illustrative purposes and without limitation, a description of capabilities of apparatus 710, as STA 110, and apparatus 720, as STA 120, is provided below. It is noteworthy that, although a detailed description of capabilities, functionalities and/or technical features of apparatus 720 is provided below, the same may be applied to apparatus 710 although a detailed description thereof is not provided solely in the interest of brevity. It is also noteworthy that, although the example implementations described below are provided in the context of WLAN, the same may be implemented in other types of networks.

Under various proposed schemes pertaining to coverage enhancement for 6GHz and/or LPI applications in wireless communications in accordance with the present disclosure, with apparatus 710 implemented in or as STA 110 functioning as a non-AP STA and apparatus 720 implemented in or as STA 120 functioning as an AP STA in network environment 100, processor 712 of apparatus 710 may communicate, via transceiver 716, with apparatus 720 in a 6GHz wireless band and/or one or more LPI channels. Moreover, processor 712 may perform, via transceiver 716, a receiving signal combination and detection across multiple bandwidths such that a power level or signal strength is enhanced in communicating with the second STA.

In some implementations, in performing the receiving signal combination and detection across multiple bandwidths, processor 712 may combine received signals across different sizes of bandwidths in communicating with the second STA.

In some implementations, in combining the received signals across different sizes of bandwidths, processor 712 may combine transmission bandwidths greater than 80MHz, for example, bandwidths of 160MHz and 320MHz.

In some implementations, in performing the receiving signal combination and detection, processor 712 may combine non-HT duplicate PPDUs in communicating with the second STA. In some implementations, in combining the non-HT duplicate PPDUs, processor 712 may combine the non-HT duplicate PPDUs for a transmission bandwidth of greater than 80MHz.

In some implementations, in combining the non-HT duplicate PPDUs, processor 712 may combine L-STFs of multiple PPDUs. Alternatively, or additionally, in combining the non-HT duplicate PPDUs, processor 712 may combine L-LTFs of multiple PPDUs.

In some implementations, in communicating, processor 712 may communicate in a MLO with EMLSR. In some implementations, in communicating, processor 712 may further transmit or receive an initial control frame in a non-HT PPDU or non-HT duplicate PPDU using a rate of 6 Mbps, 12 Mbps or 24 Mbps.

In some implementations, in communicating, processor 712 may communicate in a SMPS mode.

It is noteworthy that, although above examples are provided in the context of processor 712 and apparatus 710, the same may be applicable to processor 722 and apparatus 720.

### Illustrative Processes

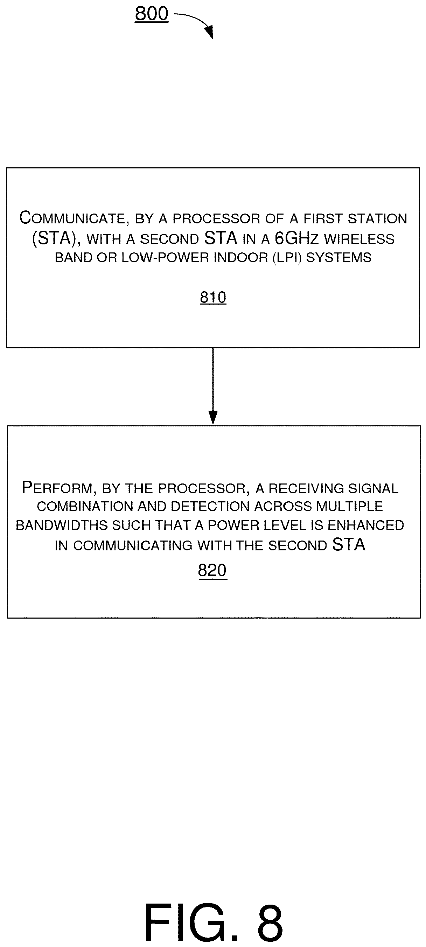

FIG. 8 illustrates an example process 800 in accordance with an implementation of the present disclosure. Process 800 may represent an aspect of implementing various proposed designs, concepts, schemes, systems and methods described above. More specifically, process 800 may represent an aspect of the proposed concepts and schemes pertaining to coverage enhancement for 6GHz and/or LPI applications in wireless communications in accordance with the present disclosure. Process 800 may include one or more operations, actions, or functions as illustrated by one or more of blocks 810 and 820. Although illustrated as discrete blocks, various blocks of process 800 may be divided into additional blocks, combined into fewer blocks, or eliminated, depending on the desired implementation. Moreover, the blocks/sub-blocks of process 800 may be executed in the order shown in FIG. 8 or, alternatively in a different order. Furthermore, one or more of the blocks/sub-blocks of process 800 may be executed repeatedly or iteratively. Process 800 may be implemented by or in apparatus 710 and apparatus 720 as well as any variations thereof. Solely for illustrative purposes and without limiting the scope, process 800 is described below in the context of apparatus 710 implemented in or as STA 110 functioning as a non-AP STA and apparatus 720 implemented in or as STA 120 functioning as an AP STA of a wireless network such as a WLAN in network environment 100 in accordance with one or more of IEEE 802.11 standards. Process 800 may begin at block 810.

At 810, process 800 may involve processor 712 of apparatus 710, as a first STA (e.g., STA 110), communicating, via transceiver 716, with apparatus 720 as a second STA (e.g., STA 120) in a 6GHz wireless band and/or one or more LPI channels. Process 800 may proceed from 810 to 820.

At 820, process 800 may involve processor 712 performing, via transceiver 716, a receiving signal combination and detection across multiple bandwidths such that a power level or signal strength is enhanced in communicating with the second STA.

In some implementations, in performing the receiving signal combination and detection across multiple bandwidths, process 800 may involve processor 712 combining received signals across different sizes of bandwidths in communicating with the second STA.

In some implementations, in combining the received signals across different sizes of bandwidths, process 800 may involve processor 712 combining transmission bandwidths greater than 80MHz, for example, bandwidths of 160MHz and 320MHz.

In some implementations, in performing the receiving signal combination and detection, process 800 may involve processor 712 combining non-HT duplicate PPDUs in communicating with the second STA. In some implementations, in combining the non-HT duplicate PPDUs, process 800 may involve processor 712 combining the non-HT duplicate PPDUs for a transmission bandwidth of greater than 80MHz.

In some implementations, in combining the non-HT duplicate PPDUs, process 800 may involve processor 712 combining L-STFs of multiple PPDUs. Alternatively, or additionally, in combining the non-HT duplicate PPDUs, process 800 may involve processor 712 combining L-LTFs of multiple PPDUs.

In some implementations, in communicating, process 800 may involve processor 712 communicating in a MLO with EMLSR. In some implementations, in communicating, process 800 may further involve processor 712 transmitting or receiving an initial control frame in a non-HT PPDU or non-HT duplicate PPDU using a rate of 6 Mbps, 12 Mbps or 24 Mbps.

In some implementations, in communicating, process 800 may involve processor 712 communicating in a SMPS mode.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

## Claims

1. A method, comprising:
communicating, by a processor of a first station, in the following also referred to as STA, with a second STA in a 6GHz wireless band or low-power indoor, in the following also referred to as LPI, channels (810); and
performing, by the processor, a receiving signal combination and detection across multiple bandwidths such that a power level or signal strength is enhanced in communicating with the second STA (820).

2. An apparatus (710) implementable in a first station, in the following also referred to as STA, comprising:
a transceiver (716) configured to communicate wirelessly; and
a processor (712) coupled to the transceiver (716) and configured to perform operations comprising:
communicating, via the transceiver (716), with a second STA in a 6GHz wireless band or low-power indoor, in the following also referred to as LPI, channels; and
performing, via the transceiver (716), a receiving signal combination and detection across multiple bandwidths such that a power level or signal strength is enhanced in communicating with the second STA.

3. The method of Claim 1 or the apparatus of Claim 2, wherein the performing of the receiving signal combination and detection across multiple bandwidths comprises combining received signals across different sizes of bandwidths in communicating with the second STA.

4. The method or the apparatus of Claim 3, wherein the combining of the received signals across different sizes of bandwidths comprises combining transmission bandwidths greater than 80MHz.

5. The method of any one of Claims 1, 3 and 4, or the apparatus of any one of Claims 2 to 4, wherein the performing of the receiving signal combination and detection comprises combining non-high-throughput, in the following also referred to as non-HT, duplicate physical-layer protocol data units, in the following also referred to as PPDUs, in communicating with the second STA.

6. The method or the apparatus of Claim 5, wherein the combining of the non-HT duplicate PPDUs comprises combining the non-HT duplicate PPDUs for a transmission bandwidth of greater than 80MHz.

7. The method or the apparatus of Claim 5 or 6, wherein the combining of the non-HT duplicate PPDUs comprises combining legacy short training fields, in the following also referred to as L-STFs, of multiple PPDUs.

8. The method or the apparatus of any one of Claims 5 to 7, wherein the combining of the non-HT duplicate PPDUs comprises combining legacy long training fields, in the following also referred to as L-LTFs, of multiple PPDUs.

9. The method of any one of Claims 1 and 3 to 8, or the apparatus of any one of Claims 2 to 8, wherein the communicating comprises communicating in a multi-link operation, in the following also referred to as MLO, with enhanced multi-link single radio, in the following also referred to as EMLSR.

10. The method or the apparatus of Claim 9, wherein the communicating further comprises transmitting or receiving an initial control frame in a non-high-throughput, in the following also referred to as non-HT, PPDU or non-HT duplicate PPDU using a rate of 6 Mbps, 12 Mbps or 24 Mbps.

11. The method of any one of Claims 1 and 3 to 10, or the apparatus of any one of Claims 2 to 10, wherein the communicating comprises communicating in a spatial multiplexing power save, in the following also referred to as SMPS, mode.
